# EUROPEAN PATENT SPECIFICATION

(11) **EP 1 482 663 B1**
(45) Date of publication and mention of the grant of the patent: **16.08.2006**
(21) Application number: 04001825.1
(22) Date of filing: 05.05.2003
(51) Int. Cl.: H04B 10/158, H04B 10/08

(54) **Method of testing an optical electrical converter**
Testverfahren eines optoelektrischen Wandlers
Procédé d'éprouver un convertisseur optoéléctrique

(43) Date of publication of application: 01.12.2004
(62) Divisional of application: 03010145.5
(73) Proprietor: Harman Becker Automotive Systems GmbH, 76307 Karlsbad (DE)
(72) Inventor: Becht, Markus, 76359 Marxzell-Pfaffenrot (DE); Jurzitza, Dieter, Dr., 76131 Karlsruhe (DE); Schöpp, Harald, 76275 Ettlingen (DE)
(74) Representative: Grünecker, Kinkeldey, Stockmair & Schwanhäusser Anwaltssozietät

(56) References cited:
- US-A- 5 652 668
- PATENT ABSTRACTS OF JAPAN vol. 006, no. 060 (E-102), 17 April 1982 (1982-04-17) & JP 57 003443 A (TOSHIBA CORP), 8 January 1982 (1982-01-08)

## Description

The invention concerns a method of testing an optical electrical converter which receives an optical input signal and provides an electrical output signal. Such converters are typically employed in broadband high speed optical data communication networks which have found widespread use in transmitting audio and video data.

Optical electrical converters are components that vary its electrical output signal dependent on optical input signal, e.g. photo resistors, photo diodes or photo transistors. They are typically manufactured as highly integrated semiconductor components with a highly complex procedure that allows production of high volumes at low costs. The manufacturing process due to its complexity often produces failure rates in the range of 0.5% to 5%. Consequently, each component is tested before being sold by applying a test signal and monitoring the output signal to determine whether it lies in a given tolerance range. However, it has been realized that the conventional performance test is insufficient insofar as certain failures in the converter only appear in a combination of special environmental conditions. However, to do performance tests by applying various environmental influences (e.g. temperature variations) is very time consuming and cost intensive.

Consequently, in many cases environmental tests are only done with very few parts from time to time to spot check the production. However, also this procedure is unsatisfactory, as it is highly unreliable and might take considerable time to detect failures.

US 5,652,668 discloses a system and method for test an electro-optic modules comprising a transmitter and a receiver. This system is capable of automatically measuring various parameters associated with the transmitter and/or receiver of the module, these parameters including transmitter average power and receiver sensitivity among others. A subroutine serves for measuring receiver sensitivity by measuring the bit error rates in response to applying three different values of optical power to the receiver. Based on the measured bit error rates, the receivers sensitivity is determined which leads to a decision whether a component is passed or failed.

Therefore, a need arises for a testing method being able to quickly and reliably detect failures in optical electrical converters to distinguish between good and bad components.

The invention provides a method of testing an optical electrical converter as set forth in claim 1. The invention is based on the idea of applying optical input signals with two different duty cycles to the DUT and the output signals in response thereto are evaluated. By varying the duty cycle either by a predetermined pattern or dynamically and evaluating the output signals, it is already possible to distinguish good from bad components, as the output signals of each converter under test will be affected by this stimulation.

In the following the invention will be described in further detail with reference to the enclosed drawings which show:
- **Figure 1**: a circuit arrangement for testing an optical electrical converter;
- **Figure 2**: a flow chart illustrating the steps of a testing method under application of an input signal with a parameter out of application range;
- **Figure 3**: a flow chart illustrating the steps of a testing method applying a modulated input signal with a non-modulated component;
- **Figure 4**: a flow chart illustrating the steps of a testing method using a duty cycle variation; and
- **Figure 5**: illustrative examples for variations of the duty cycle out of the specified application range.

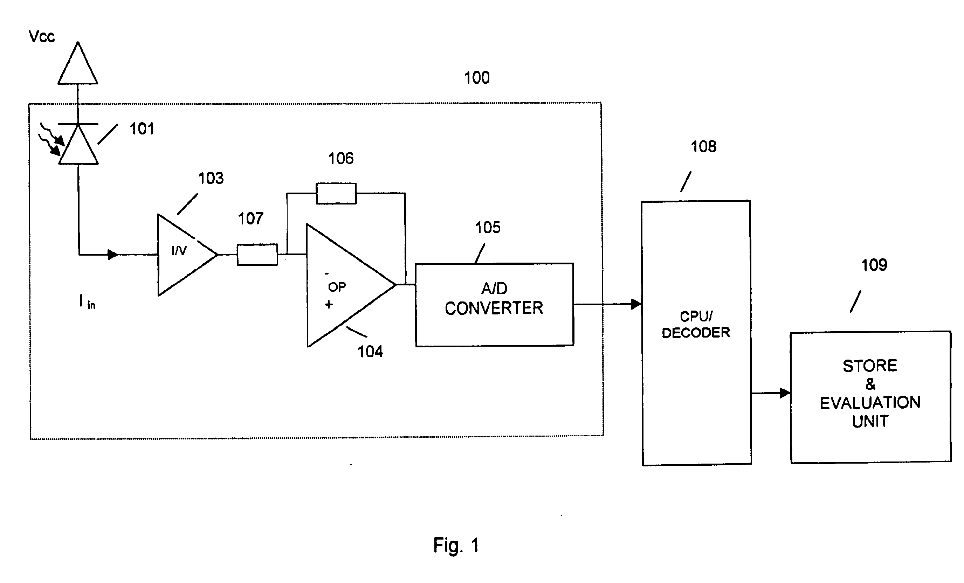

Figure 1 shows an optical electrical converter 100, which is used as a component in optical data bus systems for audio and video transmission. Such optical data networks have found widespread use and are typically standardized, such as IEEE 1394, D2B Optical , BYTEFLIGHT, FLEXRAY, MOST or SPDIF.

In figure 1, the converter 100 is exemplarily shown with the dashed line and includes a photo diode 101. The photo diode 101 receives a positive voltage V_{cc} and generates an input current Iᵢₙ to flow when an optical input signal is received by its photo sensitive surface. The input current Iᵢₙ is subsequently converted in a current/voltage converter 103 before being applied to the negative input of an operational amplifier with feedback resistor 106 and input resistor 107. The output of the operational amplifier is applied to an analog/digital converter 105 for outputting a digital signal.

As indicated with the dashed line, the internal analog signals can not be accessed externally. The converter is connected to a decoder or CPU 108. Further, a typical testing arrangement includes a store-and-evaluation unit 109 to determine whether the actual converter under test is a good part or failure part.

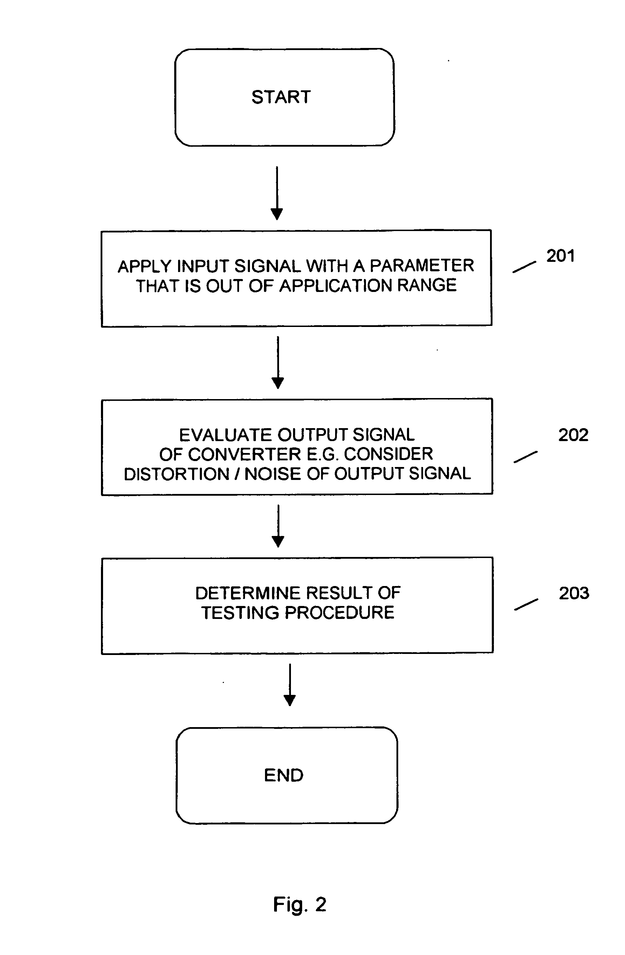

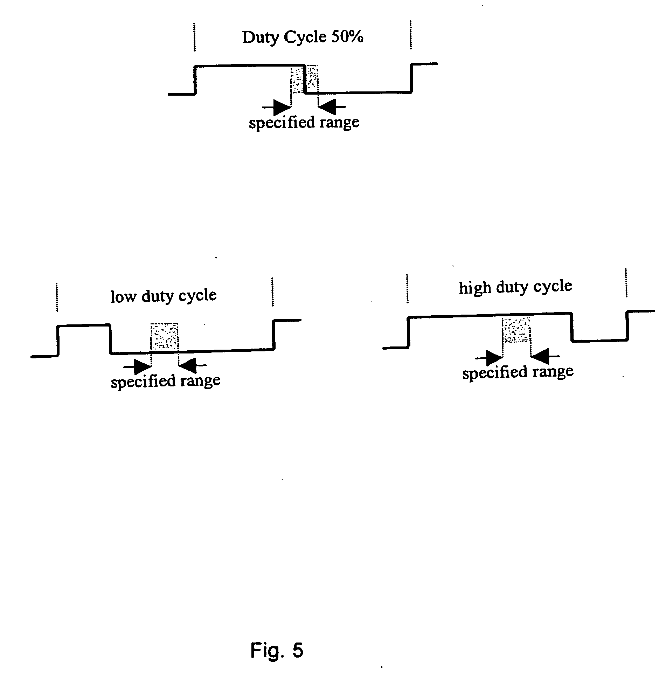

Figure 2 illustrates the steps of a testing method under application of an input signal with a parameter that is out of the normal application range. More specifically, an input signal is applied to the DUT with a parameter that is out of a specified application range being defined by the limits of normal operation characteristics of the converter (step 201). For example, the specified range for a normal operation for the duty cycle could be 45% to 55%. In this case, a signal having a low or high duty cycle out of the specified range, e.g. 30% or 70% could be applied, as illustrated in Figure 5 described below.

The respective output signal of the converter is stored and evaluated in step 202. As an example, the timing distortion or the noise contained in the output signal could be stored and compared with at least one nominal value for a give tolerance range. Hence, by applying a specific stimulating input signal possibly even violating the specified application range of the DUT, provided that the device is not damaged by this signal, the internal balancing mechanism of the converter will be influenced such that it exhibits a significant difference in the performance of good and bad parts. This allows to separate good from bad parts very easily (step 203) without the need for applying environmental influences, such as temperature variations, in a specific combination.

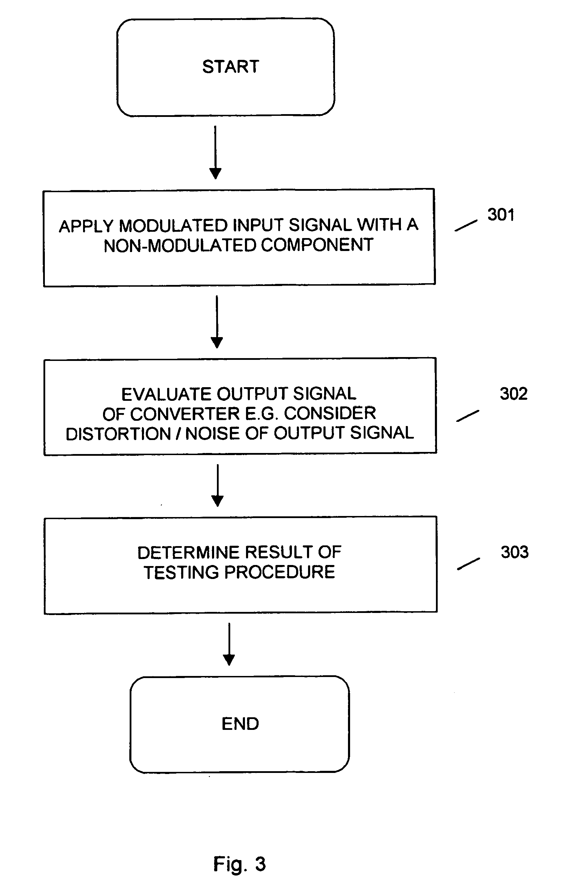

In figure 3 a variant of the testing method is shown. Whereas in the testing method illustrated in figure 2, an input signal with a parameter out of the application range is applied to the DUT, in the method shown in figure 3, an input signal with a superimposed non-modulated component is applied to the converter in step 301. This achieves a similar effect as the application of an input signal "beyond the limits" of normal operation, namely resulting in a shift of the internal balancing of the device according to the level of the non-modulated optical input signal. Consequently, after evaluation of the output signal (step 302) the result of the testing procedure may be easily determined in step 303.

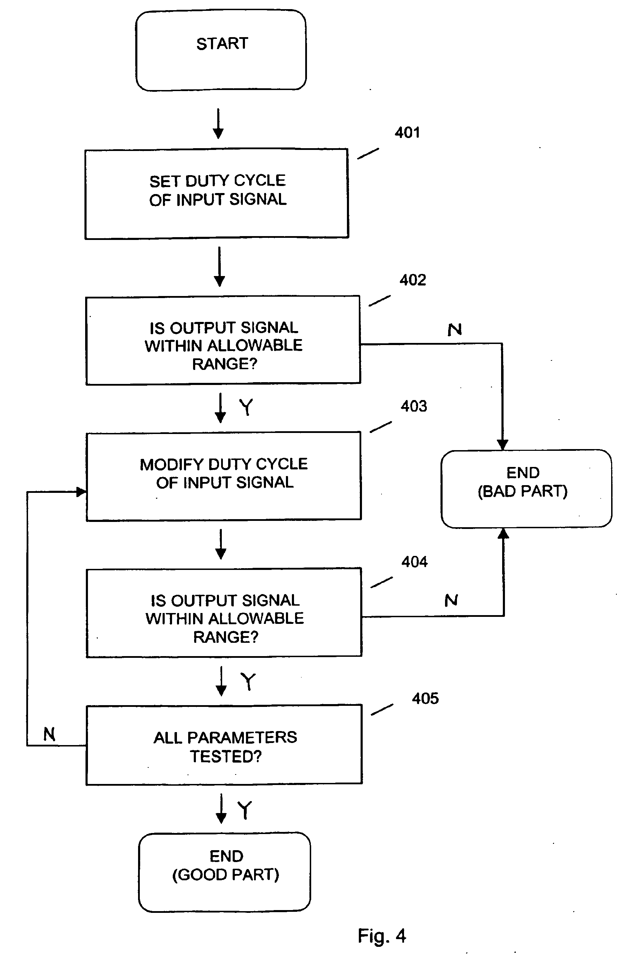

Figure 4 illustrates a testing procedure involving a modification of the duty cycle of the input signal. Whereas conventional methods only apply a test procedure with a fixed duty cycle close to that used in actual operation, the duty cycle is at least varied once.

Upon initial set of the duty cycle of the input signal in step 401, in a first evaluation step, it is checked whether the output signal lies within an allowable tolerance range (step 402). If the result is already negative, it is determined that a failure has been detected in the DUT. In case the output signal is within the allowable range, the duty cycle of the input signal is modified as indicated in step 403. Subsequently, it is again checked whether the output signal lies within the allowable tolerance range (step 404). In the event that the result is negative, i.e. that the output signal is outside the tolerance range, the DUT is determined to be a bad part. Finally, it is checked whether all parameters have been tested in step 405. If so, it is decided that the DUT is a good part, otherwise the procedure reiterates the steps 403 to 405.

Figure 5 shows in the upper half an example for a duty cycle and the specified application range defined by the limits of normal operation. More specifically, the duty cycle is close to 50% with a variation of 5%. In the lower half of figure 5, the input signals of the test procedure, according to the invention, are shown. As apparent therefrom, the duty cycle takes either a low or high value (for instance 30% and 70%, respectively) that is clearly outside of the specified application range. Such extreme settings of the duty cycle of the input signal will not damage the converter but influence the internal balancing mechanism in a way that the difference in performance between good and bad parts will be immediately apparent. Consequently, quick and reliable testing of the converters can be performed without applying a combination of environmental conditions.

## Claims

1. A method of testing an optical electrical converter, which receives an optical input signal and provides an electrical output signal, comprising the steps of:
a) applying (401) an optical input signal having a first duty cycle to the converter;
b) determining (402) whether the output signal in response to the application of the optical input signal in step a) lies within an allowable tolerance range;
c) applying (403) an optical input signal having a second duty cycle to the converter;
d) determining (404) whether the output signal in response to application of the optical input signal in step c) lies within an allowable tolerance range;
e) making a decision on the result of the testing procedure on the basis of the result obtained in at least one of steps b) and d).

2. The method according to claim 1, wherein the duty cycle variation follows a predetermined pattern throughout the test procedure.

3. The method according to claim 1, wherein the duty cycle variation is altered dynamically.

4. The method according to one of claims 1 to 3, wherein the optical electrical converter is a suitable component in a standardized optical databus, such as D2B Optical, Flexray, Byteflight, MOST, IEEE 1394 or SPDIF.

## Patentansprüche

1. Verfahren zum Prüfen eines optoelektrischen Wandlers, der ein optisches Eingangssignal empfängt und ein elektrisches Ausgangssignal erzeugt, das die folgenden Schritte umfasst:
a) Anlegen (401) eines optischen Eingangssignals mit einem ersten Tastverhältnis an den Wandler;
b) Festellen (402), ob das Ausgangssignal in Reaktion auf das Anlegen des optischen Eingangssignals in Schritt a) innerhalb eines zulässigen Toleranzbereiches liegt;
c) Anlegen (403) eines optischen Eingangssignals mit einem zweiten Tastverhältnis an den Wandler;
d) Feststellen (404), ob das Ausgangssignal in Reaktion auf Anlegen des optischen Eingangssignals in Schritt c) innerhalb eines zulässigen Toleranzbereiches liegt;
e) Treffen einer Entscheidung über das Ergebnis des Prüfvorgangs auf Basis des in wenigstens einem der Schritte b) und d) gewonnen Ergebnisses.

2. Verfahren nach Anspruch 1, wobei die Variation des Tastverhältnisses während des gesamten Prüfvorgangs einem vorgegebenen Muster folgt.

3. Verfahren nach Anspruch 1, wobei die Variation des Tastverhältnisses dynamisch geändert wird.

4. Verfahren nach einem der Ansprüche 1 bis 3, wobei der optoelektrische Wandler eine geeignete Komponente in einem standardisierten optischen Datenbus, wie beispielsweise D2B Optical, Flexray, Byteflight, MOST, IEEE 1394 oder SPDIF, ist.

## Revendications

1. Procédé pour tester un convertisseur optoélectrique qui reçoit un signal optique d'entrée et fournit un signal électrique de sortie comprenant les étapes de :
a) appliquer (401) un signal optique d'entrée ayant un premier cycle opératoire au convertisseur ;
b) déterminer (402) si le signal de sortie en réponse à l'application du signal optique d'entrée de l'étape a) réside dans une gamme de tolérance admissible ;
c) appliquer (403) un signal optique d'entrée ayant un second cycle opératoire au convertisseur ;
d) déterminer (404) si le signal de sortie en réponse à l'application du signal optique d'entrée de l'étape c) réside dans une gamme de tolérance admissible ;
e) prendre une décision sur le résultat de la procédure de test sur la base du résultat obtenu dans au moins l'une des étapes b) et d).

2. Procédé selon la revendication 1, dans lequel la variation de cycle opératoire suit un modèle prédéterminé tout au long de la procédure de test

3. Procédé selon la revendication 1, dans lequel la variation de cycle opératoire est modifiée de façon dynamique.

4. Procédé selon l'une des revendications 1 à 3, dans lequel le convertisseur optoélectrique est un composant approprié dans un bus de données optiques standardisé, tel que D2B optique, Flexray, Byteflight, MOST, IEEE 1394 ou SPDIF.
